# EUROPEAN PATENT SPECIFICATION

(11) **EP 2 773 457 B1**
(45) Date of publication and mention of the grant of the patent: **19.08.2026**
(21) Application number: 12795057.4
(22) Date of filing: 02.11.2012
(51) Int. Cl.: B01J 29/76, B01J 29/72, B01J 29/85, B01J 37/02, B01D 53/94, B01D 46/24, F01N 3/20, F01N 3/035

(54) **CATALYZED FILTER FOR TREATING EXHAUST GAS**
KATALYTISCHER ABGASFILTER
FILTRE CATALYTIQUE POUR TRAITEMENT DES GAZ D'ÉCHAPPEMENT

(30) Priority: 02.11.2011 US 201161554529 P; 19.01.2012 US 201213353842
(43) Date of publication of application: 10.09.2014
(73) Proprietor: Johnson Matthey Public Limited Company, London EC2V 7AD (GB)
(72) Inventor: PHILLIPS, Paul Richard, Royston Hertfordshire SG8 5YR (GB); CHANDLER, Guy Richard, Cambridge CB23 1HB (GB); FLANAGAN, Keith Anthony, Cambridge Cambridgeshire CB1 8EF (GB); GREEN, Alexander Nicholas Michael, Baldock Hertfordshire SG7 5AL (GB)
(74) Representative: Johnson Matthey Public Limited Company
(86) International application number: PCT/IB2012/002220
(87) International publication number: WO 2013/064887

(56) References cited:
- WO-A1-2009/099937
- WO-A1-2012/075400
- WO-A2-2008/106518
- WO-A2-2011/073398

## Description

### CROSS-REFERENCE TO RELATED APPLICATIONS

This application claims priority of U.S. Provisional Application No. 61/554,529, filed November 2, 2011 and U.S. Non-Provisional Application No. 13/353,842, filed January 19, 2012,

### BACKGROUND

### 1. Field of Invention

The present invention relates to articles for treating combustion exhaust gas. More particularly, the present invention relates to particulate filters coated with a selective reduction catalyst for reducing soot and NOₓ from lean combustion exhaust gas.

### 2. Description of Related Art

The largest portions of most combustion exhaust gases contain relatively benign nitrogen (N₂), water vapor (H₂O), and carbon dioxide (CO₂); but the exhaust gas also contains in relatively small part noxious and/or toxic substances, such as carbon monoxide (CO) from incomplete combustion, hydrocarbons (HC) from un-burnt fuel, nitrogen oxides (NOₓ) from excessive combustion temperatures, and particulate matter (mostly soot). To mitigate the environmental impact of exhaust gas released into the atmosphere, it is desirable to eliminate or reduce the amount of these undesirable components, preferably by a process that does not generate other noxious or toxic substances.

One of the most burdensome components to remove from a vehicular exhaust gas is NOₓ, which includes nitric oxide (NO), nitrogen dioxide (NO₂), and nitrous oxide (N₂O). The reduction of NOₓ to N₂ in a lean burn exhaust gas, such as that created by diesel engines, is particularly problematic because the exhaust gas contains a high concentration of oxygen, which favors oxidative reactions instead of reduction. NOₓ can be reduced in a diesel exhaust gas, however, by a process commonly known as Selective Catalytic Reduction (SCR). An SCR process involves the conversion of NOₓ, in the presence of a catalyst and with the aid of a reducing agent, into elemental nitrogen (N₂) and water. In an SCR process, a gaseous reductant such as ammonia is added to an exhaust gas stream prior to contacting the exhaust gas with the SCR catalyst. The reductant is absorbed onto the catalyst and the NOₓ reduction reaction takes place as the gases pass through or over the catalyzed substrate. The chemical equation for stoichiometric SCR reactions using ammonia is:

4NO + 4NH₃ + 3O₂ → 4N₂ + 6H₂O

2NO₂ + 4NH₃ + 3O₂ → 3N₂ + 6H₂O

NO + NO₂ + 2NH₃ → 2N₂ + 3H₂O

Known SCR catalysts include zeolites and other molecular sieves. Examples of such molecular sieves include aluminosilicates and silico-aluminophosphates having a Framework Type of CHA (chabazite), BEA (beta), MOR (mordenite), and the like. To improve the material's catalytic performance and hydrothermal stability, molecular sieves for SCR applications are often promoted with one or more transition metals, such as copper or iron, that are loosely held to the molecular sieve's framework as exchanged metal ions. For example, WO 2010/043891 describes a large crystal copper promoted zeolite having a CHA framework.

Since SCR catalysts generally serve as heterogeneous catalysts (i.e., solid catalyst in contact with a gas and/or liquid reactant), the catalysts are usually supported by a substrate. Preferred substrates for use in mobile applications include flow-through monoliths having a so-called honeycomb geometry that comprise multiple adjacent, parallel channels that are open on both ends and generally extend from the inlet face to the outlet face of the substrate and result in a high-surface area-to-volume ratio. Catalytic material is applied to the substrate, typically as a washcoat or other slurry that can be embodied on and/or in the walls of the substrate.

In addition to NOx, the exhaust gas of diesel engines tends to have soot and other particulate matter. Soot emissions can be remedied by passing the soot-containing exhaust gas through a diesel particulate filter (DFP), such as a wall-flow filter. Wall-flow filters are similar to flow-through honeycomb substrates in that they contain a plurality of adjacent, parallel channels. However, the channels of flow-through honeycomb substrates are open at both ends, whereas the channels of wall-flow substrates have one end capped, wherein the capping occurs on opposite ends of adjacent channels in an alternating pattern. Capping alternating ends of channels prevents the gas entering the inlet face of the substrate from flowing straight through the channel and existing. Instead, the exhaust gas enters the front of the substrate and travels into about half of the channels where it is forced through the channel walls prior to entering the second half of the channels and exiting the back face of the substrate.

To reduce the amount of space required for an exhaust system, it is often desirable to design individual exhaust components to perform more than one function. For example, applying an SCR catalyst to a wall-flow filter substrate instead of a flow-through substrate serves to reduce the overall size of an exhaust treatment system by allowing one substrate to serve two functions, namely catalytic conversion of NOₓ by the SCR catalyst and removal of soot by the filter. (See, e.g., WO 2003/054364) However, coating the filter with an operable amount of SCR catalyst can undesirably increase the backpressure across the filter which, in turn, reduces engine performance and fuel economy. This is particularly true for high performance SCR catalysts, such as washcoats comprising transition metal promoted zeolites.

Conventional methods for preparing slurry washcoats for wall-flow filters involve milling agglomerations of small crystal zeolites to reduce the mean particle diameter of the catalyst crystal in order to achieve the required penetration of coating on the pores of the filter walls. For example, Examples 16 and 17 of WO 2008/106519 suggests that milling agglomerations of small crystal CHA zeolite to obtain a slurry comprising 90% particles smaller than 3.5 µm results in better NOx conversion compared to a similar catalyst composition that was milled to only 8.4 µm. However, milling the catalyst also produces an unwanted portion of very small particles which, due to their small size, enters the pores of the filter substrate making them less accessible to the NOₓ and NH₃ gas stream, thus lowering the overall activity of the catalyst. To prevent the small catalyst particles from entering the microcracks, the filter substrate is typically passivated, for example with a polymeric coating, prior to coating the filter with a catalyst. However, passivation of the filter has significant disadvantages. One disadvantage is that passivation substantially increases the cost of the filter. Another disadvantage is that coating the substrate with a polymeric layer decreases gas permeation.

WO 2010/097638 discloses that backpressure across a catalyzed DFP can be reduced by applying a transition metal promoted zeolite catalyst as a coating on the inlet and/or outlet surfaces of the walls of the DFP vis-à-vis permeating the filter walls with similar catalyst composition. WO2008/106518 teaches that the combination of a fiber matrix wall flow filter and a chabazite molecular sieve SCR catalyst allows wall flow substrates to be loaded with practical levels of the SCR catalyst without causing excessive back pressure across the coated filter when implemented in emission treatment systems. However, additional improvements to backpressure and/or catalyst performance are still desirable. Accordingly, there remains a need for DFPs which produces a relatively low backpressure when coated with an effective amount of an SCR catalyst.

### SUMMARY OF THE INVENTION

Applicants have surprisingly found that coating the internal porous structure of a wall-flow filter with large-crystal, small-pore molecular sieve catalysts with minimal agglomeration produces a SCR filter having better performance compared to similar filter substrates coated with small-crystal catalysts and also have better or similar performance compared to similar filter substrates coated with a large crystal catalyst layer on the surface of the filter. The catalyst coatings of the present invention offer several advantages over previously known catalyst coatings, including improved thermally stability and improved SCR performance. Not wanting to be bound by any particular theory, it is believed that coating a wall-flow filter with large crystal molecular sieves having little to no agglomeration restricts the catalyst to relatively larger interconnected pores of the filter. Without this restriction, a catalyst coating might enter the smaller pore spaces and block or divert the flow of exhaust gas though such small pores. Moreover, using large crystal having little to no agglomeration surprisingly improves (i.e., reduces) backpressure compared to conventional permeated catalyst.

Another advantage of the present invention is that detrimental interactions between the catalyst and substrates, such as aluminum titanate (AT), are reduced. For example, the catalyst coating is restricted from entering the sub-micron thermal expansion joints within the substrate which might otherwise lead to filter cracking when the substrate undergoes thermal stress. Yet another advantage of the present invention is that it removes the need for passivation of the porous substrate.

Accordingly, provided is a filter article comprising: a. a wall-flow filter comprising a porous substrate having inlet and outlet faces and pores having a mean pore size; and b. an SCR catalyst composition coated on at least the pore spaces between said inlet and outlet faces, wherein the SCR catalyst composition comprises transition metal promoted molecular sieve crystals, wherein: i. said molecular sieve crystals have a mean crystal size of 0.5 to 15 µm by SEM according to the description, ii. said molecular sieve crystals are present in said composition as individual crystals, agglomerations having a mean particle size of less than 15 µm by SEM according to the description and the lower limit of the mean particle size of the agglomeration is the composition's mean individual crystal size, or a combination of said individual crystals and said agglomerations; and iii. said molecular sieve crystals are an aluminosilicate or a silico-aluminophosphate of a Framework Type having a maximum ring size of eight tetrahedral atoms; wherein the ratio of the mean pore size to mean crystal size is from 3:1 to 20:1; and wherein the ratio of mean pore size to mean particle size of agglomerations is from 3:1 to 20:1.

In another aspect of the invention, provided is a system for treating an exhaust gas comprising (a) the filter article above (b) a conduit connecting the wall-flow filter with a source of lean burn exhaust gas containing particulate matter and NOₓ, and (c) a reductant supply system for introducing a reductant into a lean combustion exhaust gas, wherein the reductant supply system is in fluid communication with the catalytic wall-flow filter and is disposed upstream of the catalytic wall-flow filter relative to gas flow through the filter.

In another aspect of the invention, provided is a method for treating an exhaust gas comprising (a) passing a lean combustion exhaust gas comprising particulate matter and NOₓ through the filter article above, wherein said passing separates at least a portion of said particulate matter from said exhaust gas to form a partially purified exhaust gas; and (b) contacting, in the presence of a reducing agent, the lean combustion exhaust gas and/or the partially purified exhaust gas with the SCR catalyst composition to selectively reduce at least a portion of the NOₓ to N₂ and other components.

### DETAILED DESCRIPTION OF PREFERRED EMBODIMENTS OF THE INVENTION

In a preferred embodiment, the invention is directed to a catalytic filter for improving environmental air quality and, in particular, for improving exhaust gas emissions generated by diesel and other lean burn engines. Exhaust gas emissions are improved, at least in part, by reducing both NOₓ and particulate matter concentrations in the lean exhaust gas. Accordingly, preferred catalytic filters comprise a porous substrate, such as a diesel particulate filter (DFP), which serves both to mechanically remove particulate matter from an exhaust gas stream passing through the porous substrate and to support a catalyst composition useful for selectively reducing NOₓ in an oxidative environment (i.e., an SCR catalyst).

The SCR catalyst compositions contain many large molecular sieve crystals promoted with a transition metal, provided that the crystals are present in the catalyst composition as individual crystals and/or small agglomerations of crystals. Molecular sieves within the present invention are an aluminosilicate or a silico-aluminophosphate having a Framework type having a maximum ring size of eight tetrahedral atoms. Molecular sieves with a framework having a maximum ring size of eight tetrahedral atoms are commonly referred to as small pore molecular sieves. Examples of small pore molecular sieves are those having a Framework Type identified by the following codes: ACO, AEI, AEN, AFN, AFT, AFX, ANA, APC, APD, ATT, CDO, CHA, DDR, DFT, EAB, EDI, EPI, ERI, GIS, GOO, IHW, ITE, ITW, LEV, KFI, MER, MON, NSI, OWE, PAU, PHI, RHO, RTH, SAT, SAV, SIV, THO, TSC, UEI, UFI, VNI, YUG or ZON, as defined by the Structure Commission of the International Zeolite Association. The catalyst composition can comprise one or more molecular sieve materials, having the same or different Framework Types.

In certain preferred embodiments, the catalyst comprises at least one molecular sieve material having a Framework Type selected from the group consisting of CHA, ERI, and LEV. A particularly preferred Framework Type for certain applications is CHA. Examples of useful aluminosilicate zeolites having a CHA framework include the CHA isotypes Linde-D, Linde-R, SSZ-13, LZ-218, Phi, and ZK-14. Examples of suitable SAPOs having a CHA framework include SAPO-34. In one particular embodiment, the molecular sieve is SAPO-34. Examples of useful aluminosilicate zeolites having an ERI framework include the ERI isotypes erionite, ZSM-34, and Linde Type T. Examples of useful aluminosilicate zeolites having a LEV framework include the LEV isotypes levynite, Nu-3, LZ-132, and ZK-20.

For certain embodiments which utilize a CHA zeolite, the zeolite preferably has a silica-to-alumina ratio (SAR) of 15 to 50, for example from about 20 to about 40 or about 25 to about 30. In other embodiments which utilize a CHA zeolite, the zeolite preferably has a silica-to-alumina ratio of about 10 to about 25, for example from about 14 to about 20 or 15 to about 17. The silica-to-alumina ratio of zeolites may be determined by conventional analysis. This ratio is meant to represent, as closely as possible, the ratio in the rigid atomic framework of the zeolite crystal and to exclude silicon or aluminum in the binder or in cationic or other form within the channels. Since it may be difficult to directly measure the silica to alumina ratio of zeolite after it has been combined with a binder material, particularly an alumina binder, these silica-to-alumina ratios are expressed in terms of the SAR of the zeolite per se, i.e., prior to the combination of the zeolite with the other catalyst components.

Molecular sieves with application in the present invention include those that have been treated to improve hydrothermal stability. Conventional methods for improving hydrothermal stability include: (i) dealumination by steaming and acid extraction using an acid or complexing agent (e.g. EDTA--ethylenediaminetetraacetic acid); treatment with acid and/or complexing agent; treatment with a gaseous stream of SiCl₄ (replaces Al in the zeolite framework with Si); and (ii) cation exchange--use of multi-valent cations such as La.

The molecular sieve is promoted with at least one transition metal. Examples of transition metal promotion include the addition of a transition metal to the molecular sieve by ion exchange, impregnation, isomorphous substitution, etc. Transition metals may be attached to the framework of the molecular sieve and/or reside in or on the molecular sieve as free ions. As used herein, the at least one transition metal is defined to include one or more of chromium (Cr), manganese (Mn), iron (Fe), cobalt (Co), cerium (Ce), nickel (Ni), copper (Cu), zinc (Zn), gallium (Ga), molybdenum (Mo), silver (Ag), indium (In), ruthenium (Ru), rhodium (Rh), palladium (Pd), rhenium (Re), iridium (Ir), platinum (Pt), and tin (Sn), and mixtures thereof. Preferably, the one or more transition metals may be chromium (Cr), cerium (Ce), manganese (Mn), iron (Fe), cobalt (Co), nickel (Ni), and copper (Cu), and mixtures thereof, and most preferably copper. In one embodiment, the transition metal is Cu, Fe, or combinations thereof. A particularly preferred metal is Cu. In one embodiment, the transition metal loading is about 0.1 to about 10 wt% of the molecular sieve, for example from about 0.5 wt% to about 5 wt%, from about 0.5 to about 1 wt%, and from about 2 to about 5 wt%. The type and concentration of the transmission metal can vary according to the host molecular sieve and the application.

Preferably, the CHA zeolite material contains from about 75 to about 500 g/ ft³ (2.65 to 17.66 g/L) of copper and/or iron per cubic foot of zeolite, more preferably about 100 to about 200 g/ft³ (3.53 to 7.06 g/L) Cu and/or Fe per cubic foot of zeolite, or from about 85 to about 100 g/ft³ (3.00 to 3.53 g/L) Cu and/or Fe per cubic foot of zeolite.

In another embodiment of the invention, the amount of transition metal, such as copper, in the catalyst is not particularly limited provided that the catalyst can achieve a NOₓ conversion of at least about 65%, preferably at least about 75%, and more preferably at least about 85%, at a temperature of at least about 450 °C, more preferably a temperature of at least about 550 °C, and even more preferably a temperature of at least about 650 °C. Preferably, the conversion at each of these temperature ranges is at least about 70%, more preferably 80%, and even more preferably 90% of the conversion capacity of the catalyst when the catalyst is operating at a temperature of 250 °C. Preferably, the catalyst can achieve 80% conversion with a selectivity for N₂ of at least about 85% at one or more of these temperature ranges.

Surprisingly, the combination of restricting the size of the molecular sieve crystalste 0.5 µm to 15 µm and restricting the size of agglomerations of crystals to less than 15 µm in a catalyst composition results in an improved SCR performance when such catalyst compositions are applied to a diesel particulate soot filter, for example as a washcoat that permeates the filter. In particular, these catalysts on a filter have higher SCR activity using a nitrogenous reductant compared to a similar molecular sieve material but with a smaller crystallite size.

Accordingly, in preferred embodiments the catalyst composition comprises molecular sieve crystals having a mean crystal size of 0.5 and 15 µm, such as 0.5 to 5 µm, about 0.7 to 5 µm, about 1 to 5 µm, about 1.5 to 5.0 µm, about 1.5 to about 4.0 µm, about 2 to 5 µm, or about 1 µm to about 10 µm. The crystals in the catalyst composition can be individual crystals, agglomeration of crystals, or a combination of both, provided that agglomeration of crystals have a mean particle size of less than 15 µm, preferably less than about 10 µm, and more preferably less than about 5 µm. The lower limit on the mean particle size of the agglomeration is the composition's mean individual crystal size.

Crystal size (also referred to herein as the crystal diameter) is the length of one edge of a face of the crystal. For example, the morphology of chabazite crystals is characterized by rhombohedral (but approximately cubic) faces wherein each edge of the face is approximately the same length. Direct measurement of the crystal size can be performed using microscopy methods, such as SEM and TEM. For example, measurement by SEM involves examining the morphology of materials at high magnifications (typically 1000× to 10,000×). The SEM method can be performed by distributing a representative portion of the zeolite powder on a suitable mount such that individual particles are reasonably evenly spread out across the field of view at 1000× to 10,000× magnification. From this population, a statistically significant sample of random individual crystals (e.g.,50 - 200) are examined and the longest dimensions of the individual crystals parallel to the horizontal line of the straight edge are measured and recorded. (Particles that are clearly large polycrystalline aggregates should not be included in the measurements.) Based on these measurements, the arithmetic mean of the sample crystal sizes is calculated.

Particle size of an agglomeration of crystals can be determined in a similar manner except that instead of measuring the edge of a face of an individual crystal, the length of the longest side of an agglomeration is measured. Other techniques for determining mean particle size, such as laser diffraction and scattering can also be used.

As used herein, the term "mean" with respect to crystal or particle size is intended to represent the arithmetic mean of a statistically significant sample of the population. For example, a catalyst comprising molecular sieve crystals having a mean crystal size of 0.5 to 5.0 µm is catalyst having a population of the molecular sieve crystals, wherein a statistically significant sample of the population (e.g., 50 crystals) would produce an arithmetic mean within the range of 0.5 to 5.0 µm.

In addition to the mean crystal size, catalyst compositions preferably have a majority of crystal sizes greater than about 0.5 µm, preferably between about 0.5 and about 15 µm, such as about 0.5 to about 5 µm, about 0.7 to about 5 µm, about 1 to about 5 µm, about 1.5 to about 5.0 µm, about 1.5 to about 4.0 µm, about 2 to about 5 µm, or about 1 µm to about 10 µm. Preferably, the first and third quartiles of the sample of crystal sizes are greater than about 0.5 µm, preferably between about 0.5 and about 15 µm, such as about 0.5 to about 5 µm, about 0.7 to about 5 µm, about 1 to about 5 µm, about 1.5 to about 5.0 µm, about 1.5 to about 4.0 µm, about 2 to about 5 µm, or about 1 µm to about 10 µm.

As used herein, the term "first quartile" means the value below which one quarter of the elements are located. For example, the first quartile of a sample of forty crystal sizes is the size of the tenth crystal when the forty crystal sizes are arranged in order from smallest to largest. Similarly, the term "third quartile" means that value below which three quarters of the elements are located. For example, the third quartile of a sample of forty crystal sizes is the size of the thirtieth crystal when the forty crystal sizes are arranged in order from smallest to largest.

Large crystal CHA zeolites, such as the isotype SSZ-13, can be synthesized by known processes, such as those described in WO 2010/043891 and WO 2010/074040

The catalyst composition for use in the present invention can be in the form of a washcoat, preferably a washcoat suitable for coating a porous substrate, such as a metal or ceramic wall-flow monolith. In addition to the catalyst component, washcoat compositions can further comprise a binder selected from the group consisting of alumina, silica, (non zeolite) silica-alumina, naturally occurring clays, TiO₂, ZrO₂, and SnO₂. In certain embodiments, the catalyst composition may further comprise other components, including rare-earth stabilizers and pore-forming agents such as graphite, cellulose, starch, polyacrylate, and polyethylene, and the like.

Preferably, the catalyst composition is unmilled. Preferably, the washcoat containing the catalyst is unmilled. Preferably, the zeolite crystals and agglomerations are unmilled. As used herein, milling catalysts refers to a mechanical process, such as grinding, used to reduce the size of a substantial portion or a majority of the catalyst particles and/or crystals being milled.

In certain embodiments, the catalyst composition is free or substantially free of platinum group metals, including platinum, palladium, ruthenium, iridium, and rhodium.

In certain embodiments, the catalyst composition is free or substantially free of carboxylic acids, including but not limited to, tartaric acid, citric acid, n-acetylglutamic acid, adipic acid, alpha-ketoglutaric acid, aspartic acid, azelaic acid, camphoric acid, carboxyglutamic acid, citric acid, dicrotalic acid, dimercaptosuccinic acid, fumaric acid, glutaconic acid, glutamic acid, glutaric acid, isophthalic acid, itaconic acid, maleic acid, malic acid, malonic acid, mesaconic acid, mesoxalic acid, 3-methylglutaconic acid, oxalic acid, oxaloacetic acid, phthalic acid, phthalic acids, pimelic acid, sebacic acid, suberic acid, succinic acid, tartronic acid, terephthalic acid, traumatic acid, trimesic acid, carboxyglutamate, and derivatives thereof. In certain embodiments, the catalyst composition is free or substantially free of organic acids.

In the invention, the catalyst composition is coated on a porous substrate, for example as a washcoat. The washcoat can be applied by any conventional means, including dipping, immersion, or injection, or some combination thereof, either alone or in further combination with one or more vacuum and/or pressure cycles to facilitate the loading of the catalyst washcoat on or in the substrate and/or to clear excess washcoat from the substrate after loading. Preferably, a majority of the washcoat permeates either a majority or the entire porous substrate, compared to the amount of washcoat, if any, that remains on the inlet or outlet faces of the porous substrate. In other embodiments, a majority or the washcoat remains on the inlet and/or outlet face of the porous substrate.

In certain embodiments, the washcoat is applied directly to the porous substrate, e.g., without any intermediate, non-catalytic layers or coatings, such as a passivation layer. In certain embodiments, the washcoat is applied to an unpassivated substrate. Examples of unpassivated substrates include wall-flow ceramic monoliths constructed primarily of aluminum titanate, cordierite, silicon carbide, refractory alkali zirconium phosphates, low-expansion alkali aluminosilicates (e.g., beta-eucryptite, beta-spodumene, and pollucite), α-alumina, silicon nitride, zirconia, mullite, spodumene, alumina-silica-magnesia, zirconium silicate, ceramic fiber composite, or other ceramics, without passivation materials, such as polyvinyl alcohol/vinyl amine copolymer, polyvinyl alcohol/vinyl formamide copolymer, polymerized furfuryl alcohol, a saccharides (e.g., monosaccharides, disaccharides, oligosaccharides, and polysaccharides, including dextrose, sucrose, etc.), gelatin, or organic-based polymers and copolymers, as well as related materials such as organic and inorganic crosslinking agents including multifunctional carbodiimides, aldehydes, anhydrides, epoxies, imidates, isocyanates, melamine formaldehyde, epichlorohydrin, 2,5-dimethoxytetrahydrofuran, and 2-(4-dimethylcarbomoyl-pyridino)ethane-1 -sulfonate, phosphorous oxychloride, titanium tetrabutoxide, ammonium zirconium carbonate, and the like. Thus, in certain embodiments, the catalyst article consists essentially of a porous substrate with at least one coating of the washcoat composition, which can be arranged in one or more layers or zones.

To distinguish certain embodiments of the present invention from washcoated wall-flow filters which are produced using a passivation layer, the catalyst article of the present invention may comprise a thermal-shock resistant washcoated ceramic wall-flow filter having microcracks (e.g., sub-micron cracks) that are void ( e.g., do not contain a catalyst, passivation material, etc.). In certain embodiments, the microcracks are free or substantially free of carbon-containing deposits. In certain embodiments, the catalyst article having void microcracks has not undergone heat treatment, such as calcination or other heating that would remove or carbonize a passivation layer. Examples of such heat treatment include exposing the washcoated substrate to a temperature greater than 350 °C, preferably from about 350 to about 850 °C, more preferably from about 500 to about 600 °C for at least 15 minutes, preferably from about 15 to about 240 minutes, and more preferably from about 60 to about 90 minutes. However, such catalyst articles may undergo subsequent heat treatment processes, such as calcination, to remove water from the component.

Particular combinations of filter mean pore size, porosity, pore interconnectivity, with mean crystal/agglomeration size and washcoat loading can be combined to achieve a desirable level of particulate filtration and catalytic activity at an acceptable backpressure.

In certain embodiments, the washcoat loading on the porous substrate is >0.25 g/in³ (>15.3 g/L), such as >0.50 g/in³ (>30.5 g/L), or >0.80 g/in³ (>48.8 g/L), e.g. 0.80 to 3.00 g/in³ (48.8 to 183.1 g/L). In preferred embodiments, the washcoat loading is >1.00 g/in³ (>61.0 g/L), such as >1.2 g/in³ (>73.2 g/L), >1.5 g/in³ (>91.5 g/L), >1.7 g/in³ (>103.7 g/L) or >2.00 g/in³ (>122.0 g/L), or for example 1.5 to 2.5 g/in³ (91.5 to 152.6 g/L).

Porosity is a measure of the percentage of void space in a porous substrate and is related to backpressure in an exhaust system: generally, the lower the porosity, the higher the backpressure. Preferably, the porous substrate has a porosity of about 30 to about 80%, for example 40 to 75%, 40 to about 65%, or from about 50 to about 60%.

The pore interconnectivity, measured as a percentage of the substrate's total void volume, is the degree to which pores, void, and/or channels, are joined to form continuous paths through a porous substrate, i.e., from the inlet face to the outlet face. In contrast to pore interconnectivity is the sum of closed pore volume and the volume of pores that have a conduit to only one of the surfaces of the substrate. Preferably, the porous substrate has a pore interconnectivity volume of at least about 30%, more preferably at least about 40%.

The mean pore size of the porous substrate is also important for filtration. Mean pore size can be determined by any acceptable means, including by mercury porosimetry. The mean pore size of the porous substrate should be of a high enough value to promote low backpressure, while providing an adequate efficiency by either the substrate per se, by promotion of a soot cake layer on the surface of the substrate, or combination of both. Preferred porous substrates have a mean pore size of 10 to about 40 µm, for example about 20 to about 30µm, 10 to 25µm, 10 to about 20µm, about 20 to 25 µm, 10 to about 15µm, and about 15 to about 20 µm.

In certain embodiments of the invention, it is desirable for individual crystals to be of a size required to permeate into the porous substrate, but not into the smallest pore spaces of the substrate which would result in a blockage or diversion of the exhaust gas flow. Thus, the mean pore size of the substrate and the mean crystal size and particle size of the SCR catalyst should be correlated to achieve an improved catalytic filter. In the present invention the ratio of mean pore size to mean crystal size is from 3:1 to 20:1, for example from about 5:1 to about 10:1, or from about 6:1 to about 9:1. In the present invention the ratio of mean pore size to mean particle size is from about 3:1 to about 20:1, for example from about 5:1 to about 10:1, or from about 6:1 to about 9:1.

Preferred porous substrates for use in mobile applications include wall-flow filters, such as wall-flow ceramic monoliths, and flow through filters, such as metal or ceramic foam or fibrous filters. In addition to cordierite, silicon carbide, ceramic, and metal, other materials that can be used for the porous substrate include aluminum nitride, silicon nitride, aluminum titanate, α-alumina, mullite e.g., acicular mullite, pollucite, a thermet such as Al₂OsZFe, Al₂O3/Ni or B₄CZFe, or composites comprising segments of any two or more thereof. A particularly preferred substrate is aluminum titanate (AT), wherein AT is the predominate crystalline phase. In a preferred embodiment, the porous substrate is a wall-flow filter such as a typical cylindrical filter element consisting of many square parallel channels running in the axial direction, separated by thin porous walls. The channels are open at one end, but plugged at the other. This way the particle laden exhaust gases are forced to flow through the walls. Gas is able to escape through the pores in the wall material. Particulates, however, are too large to escape and are trapped in the filter walls.

The catalytic zeolites described herein can promote the reaction of a reductant, preferably ammonia, with nitrogen oxides to selectively form elemental nitrogen (N₂) and water (H₂O) vis-à-vis the competing reaction of oxygen and ammonia. In one embodiment, the catalyst can be formulated to favor the reduction of nitrogen oxides with ammonia (i.e., an SCR catalyst). In yet another embodiment, an SCR catalyst and an ammonia oxidation catalyst (AMOX) catalyst are used in series, wherein both catalyst comprise the metal containing zeolite described herein, and wherein the SCR catalyst is upstream of the AMOX catalyst. In certain embodiments, the AMOX catalyst is disposed as a top layer on an oxidative under-layer, wherein the under-layer comprises a platinum group metal (PGM) catalyst or a non-PGM catalyst.

The reductant (also known as a reducing agent) for SCR processes broadly means any compound that promotes the reduction of NOx in an exhaust gas. Examples of reductants useful in the present invention include ammonia, hydrazine or any suitable ammonia precursor, such as urea ((NH₂)₂CO), ammonium carbonate, ammonium carbamate, ammonium hydrogen carbonate or ammonium formate, and hydrocarbons such as diesel fuel, and the like. Decomposition of the precursor to ammonia and other by-products can be by hydrothermal or catalytic hydrolysis. Particularly preferred reductant, are nitrogen based, with ammonia being particularly preferred. Ammonia can be generated *in situ,* e.g. during rich regeneration of a NAC disposed upstream of the filter article. Alternatively, the nitrogenous reductant or a precursor thereof can be injected directly into the exhaust gas.

Provided is a method for the reduction of NOx compounds or oxidation of NH₃ in a gas, which comprises contacting the gas with a catalyst composition described herein for the catalytic reduction of NOₓ compounds for a time sufficient to reduce the level of NOₓ compounds in the gas. In one embodiment, nitrogen oxides are reduced with the reducing agent at a temperature of at least 100 °C, In another embodiment, the nitrogen oxides are reduced with the reducing agent at a temperature from about 150 to 750 °C. In a particular embodiment, the temperature range is from 175 to 550 °C, In another embodiment, the temperature range is from 175 to 400 °C. In yet another embodiment, the temperature range is 450 to 900 °C, preferably 500 to 750 °C, 500 to 650 °C, 450 to 550 °C, or 650 to 850 °C. Embodiments utilizing temperatures greater than 450 °C are particularly useful for treating exhaust gases from a heavy and light duty diesel engine that is equipped with an exhaust system comprising (optionally catalyzed) diesel particulate filters which are regenerated actively, e.g. by injecting hydrocarbon into the exhaust system upstream of the filter, wherein the zeolite catalyst for use in the present invention is located downstream of the filter.

In another embodiment, the nitrogen oxides reduction is carried out in the presence of oxygen. In an alternative embodiment, the nitrogen oxides reduction is carried out in the absence of oxygen.

Provided is a method for trapping particulate matter (PM) from exhaust gas emitted from a compression ignition engine by surface and/or depth filtration, preferable surface filtration, which method comprising contacting exhaust gas containing the PM with a filter article with a catalyst described herein.

The method can be performed on a gas derived from a combustion process, such as from an internal combustion engine (whether mobile or stationary), a gas turbine, and coal or oil fired power plants. The method may also be used to treat gas from industrial processes such as refining, from refinery heaters and boilers, furnaces, the chemical processing industry, coke ovens, municipal waste plants and incinerators, etc. In a particular embodiment, the method is used for treating exhaust gas from a vehicular lean burn internal combustion engine, such as a diesel engine, a lean-burn gasoline engine or an engine powered by liquid petroleum gas or natural gas.

Provided is an exhaust system for a vehicular lean burn internal combustion engine, which system comprising a conduit for carrying a flowing exhaust gas, a source of nitrogenous reductant, a catalyst filter article as described herein. The system can include a controller for metering the nitrogenous reductant into the flowing exhaust gas only when it is determined that the SCR catalyst is capable of catalyzing NOₓ reduction at or above a desired efficiency, such as at above 100 °C, above 150 °C or above 175 °C. The determination by the control means can be assisted by one or more suitable sensor inputs indicative of a condition of the engine selected from the group consisting of: exhaust gas temperature, catalyst bed temperature, accelerator position, mass flow of exhaust gas in the system, manifold vacuum, ignition timing, engine speed, lambda value of the exhaust gas, the quantity of fuel injected in the engine, the position of the exhaust gas recirculation (EGR) valve and thereby the amount of EGR, and boost pressure.

In a particular embodiment, metering is controlled in response to the quantity of nitrogen oxides in the exhaust gas determined either directly (using a suitable NOx sensor) or indirectly, such as using pre-correlated look-up tables or maps--stored in the control means--correlating any one or more of the above mentioned inputs indicative of a condition of the engine with predicted NOₓ content of the exhaust gas. The metering of the nitrogenous reductant can be arranged such that 60% to 200% of theoretical ammonia is present in exhaust gas entering the SCR catalyst calculated at 1: 1 NH₃/NO and 4:3 NH₃/NO₂. The control means can comprise a pre-programmed processor such as an electronic control unit (ECU).

In a further embodiment, an oxidation catalyst for oxidizing nitrogen monoxide in the exhaust gas to nitrogen dioxide can be located upstream of a point of metering the nitrogenous reductant into the exhaust gas. In one embodiment, the oxidation catalyst is adapted to yield a gas stream entering the SCR zeolite catalyst having a ratio of NO to NO₂ of from about 4:1 to about 1:3 by volume, e.g. at an exhaust gas temperature of 250 °C to 450 °C at the oxidation catalyst inlet. The oxidation catalyst can include at least one platinum group metal (or some combination of these), such as platinum, palladium, or rhodium, coated on a flow-through monolith substrate. In one embodiment, the at least one platinum group metal is platinum, palladium or a combination of both platinum and palladium. The platinum group metal can be supported on a high surface area washcoat component such as alumina, a zeolite such as an aluminosilicate zeolite, silica, non-zeolite silica alumina, ceria, zirconia, titania or a mixed or composite oxide containing both ceria and zirconia.

Provided is a vehicular lean-burn engine comprising an exhaust system described above. The vehicular lean burn internal combustion engine can be a diesel engine, a lean-burn gasoline engine, or an engine powered by liquid petroleum gas or natural gas.

Although the invention is illustrated and described herein with reference to specific embodiments, the invention is not intended to be limited to the details shown, as long as it is within the scope of the appended claims.

## Claims

1. A filter article comprising:
a. a wall-flow filter comprising a porous substrate having inlet and outlet faces and pores having a mean pore size; and
b. an SCR catalyst composition coated on at least the pore spaces between said inlet and outlet faces, wherein the SCR catalyst composition comprises transition metal promoted molecular sieve crystals, wherein:
i. said molecular sieve crystals have a mean crystal size of 0.5 to 15 µm by SEM according to the description,
ii. said molecular sieve crystals are present in said composition as individual crystals, agglomerations having a mean particle size of less than 15 µm by SEM according to the description and the lower limit of the mean particle size of the agglomeration is the composition's mean individual crystal size, or a combination of said individual crystals and said agglomerations; and
iii. said molecular sieve crystals are an aluminosilicate or a silico-aluminophosphate of a Framework Type having a maximum ring size of eight tetrahedral atoms;
wherein the ratio of the mean pore size to mean crystal size is from 3:1 to 20:1; and
wherein the ratio of mean pore size to mean particle size of agglomerations is from 3:1 to 20:1.

2. The filter article of claim 1, wherein said molecular sieve has a CHA Framework Type and said transition metal is selected from at least one of Cu and Fe.

3. The filter article of claim 2, wherein the crystals are an aluminosilicate and have a silica-to-alumina ratio (SAR) of 15 to 50.

4. The filter article of claim 1, wherein the mean crystal size is from 0.5 µm to 5 µm by SEM.

5. The filter article of claim 1, wherein said porous substrate has a mean pore size of 10 µm to 40 µm.

6. The filter article of claim 1, wherein said porous substrate has a porosity of 30% to 80%.

7. The filter article of claim 1, wherein said porous substrate is a ceramic wall-flow monolith having a porosity of 40% to 75% and a mean pore size of 10 µm to 25 µm.

8. The filter article of claim 1, wherein said porous substrate is a ceramic wall-flow monolith having aluminum titanate as a predominate crystalline phase.

9. A system for treating an exhaust gas comprising:
a. a filter article of claim 1,
b. a conduit connecting the wall-flow filter with a source of lean burn exhaust gas containing particulate matter and NOₓ, and
c. a reductant supply system for introducing a reductant into a lean combustion exhaust gas, wherein the reductant supply system is in fluid communication with the catalytic wall-flow filter and is disposed upstream of the catalytic wall-flow filter relative to gas flow through the filter.

10. A method for treating an exhaust gas comprising:
a. passing a lean combustion exhaust gas comprising particulate matter and NOₓ through a filter article of claim 1, wherein said passing separates at least a portion of said particulate matter from said exhaust gas to form a partially purified exhaust gas;
b. contacting, in the presence of a reducing agent, at least one of the lean combustion exhaust gas and the partially purified exhaust gas with the SCR catalyst composition to selectively reduce at least a portion of the NOₓ to N₂ and other components.

## Patentansprüche

1. Filterartikel, umfassend:
a. einen Wandstromfilter, umfassend ein poröses Substrat, das Einlass- und Auslassflächen aufweist, und Poren, die eine mittlere Porengröße aufweisen; und
b. eine SCR-Katalysatorzusammensetzung, die auf mindestens die Porenräume zwischen den Einlass- und Auslassflächen beschichtet ist, wobei die SCR-Katalysatorzusammensetzung übergangsmetallgeförderte Molekularsiebkristalle umfasst, wobei:
i. die Molekularsiebkristalle eine mittlere Kristallgröße von 0,5 bis 15 µm durch SEM gemäß der Beschreibung aufweisen,
ii. die Molekularsiebkristalle in der Zusammensetzung als Einzelkristalle, Agglomerationen, die eine mittlere Teilchengröße von weniger als 15 µm durch SEM gemäß der Beschreibung aufweisen und die Untergrenze der mittleren Teilchengröße der Agglomeration die mittlere Einzelkristallgröße der Zusammensetzung ist, oder eine Kombination der Einzelkristalle und der Agglomerationen vorliegen; und
iii. die Molekularsiebkristalle ein Aluminosilicat oder ein Silicoaluminophosphat eines Gerüsttyps sind, aufweisend eine maximale Ringgröße von acht tetraedrischen Atomen;
wobei das Verhältnis der mittleren Porengröße zu der mittleren Kristallgröße von 3 : 1 bis 20 : 1 beträgt; und
wobei das Verhältnis der mittleren Porengröße zu der mittleren Teilchengröße von Agglomerationen 3 : 1 bis 20 : 1 beträgt.

2. Filterartikel nach Anspruch 1, wobei das Molekularsieb einen CHA-Gerüsttyp aufweist und das Übergangsmetall aus mindestens einem von Cu und Fe ausgewählt ist.

3. Filterartikel nach Anspruch 2, wobei die Kristalle ein Aluminosilikat sind und ein Siliciumdioxid-zu-Aluminiumoxid-Verhältnis (SAR) von 15 bis 50 aufweisen.

4. Filterartikel nach Anspruch 1, wobei die mittlere Kristallgröße von 0,5 µm bis 5 µm durch SEM beträgt.

5. Filterartikel nach Anspruch 1, wobei das poröse Substrat eine mittlere Porengröße von 10 µm bis 40 µm aufweist.

6. Filterartikel nach Anspruch 1, wobei das poröse Substrat eine Porosität von 30 % bis 80 % aufweist.

7. Filterartikel nach Anspruch 1, wobei das poröse Substrat ein keramischer Wandstrommonolith ist, der eine Porosität von 40 % bis 75 % und eine mittlere Porengröße von 10 µm bis 25 µm aufweist.

8. Filterartikel nach Anspruch 1, wobei das poröse Substrat ein keramischer Wandstrommonolith ist, der Aluminiumtitanat als eine vorherrschende kristalline Phase aufweist.

9. System zum Behandeln eines Abgases, umfassend:
a. einen Filterartikel nach Anspruch 1,
b. eine Leitung, die den Wandstromfilter mit einer Quelle von Magerverbrennungsabgas verbindet, das Feinstaub und NOₓ enthält, und
c. ein Reduktionsmittelzufuhrsystem zum Einleiten eines Reduktionsmittels in ein Magerverbrennungsabgas, wobei das Reduktionsmittelzufuhrsystem in Fluidverbindung mit dem katalytischen Wandstromfilter steht und stromaufwärts des katalytischen Wandstromfilters relativ zu dem Gasstrom durch den Filter angeordnet ist.

10. Verfahren zum Behandeln eines Abgases, umfassend:
a. Führen eines Magerverbrennungsabgases, umfassend Feinstaub und NOₓ, durch einen Filterartikel nach Anspruch 1, wobei das Führen mindestens einen Anteil des Feinstaubs aus dem Abgas abtrennt, um ein teilweise gereinigtes Abgas auszubilden;
b. Kontaktieren, in der Gegenwart eines Reduktionsmittels, mindestens eines des Magerverbrennungsabgases und des teilweise gereinigten Abgases mit der SCR-Katalysatorzusammensetzung, um selektiv mindestens einen Anteil des NOₓ zu N₂ und anderen Komponenten zu reduzieren.

## Revendications

1. Article filtrant comprenant :
a. un filtre à écoulement sur paroi comprenant un substrat poreux ayant des faces d'entrée et de sortie et des pores ayant une taille moyenne de pore ; et
b. une composition de catalyseur SCR revêtue au moins sur les espaces de pore entre lesdites faces d'entrée et de sortie, dans lequel la composition de catalyseur SCR comprend des cristaux de tamis moléculaire activés par métal de transition, dans lequel :
i. lesdits cristaux de tamis moléculaire ont une taille moyenne de cristal de 0,5 à 15 µm par MEB selon la description,
ii. lesdits cristaux de tamis moléculaire sont présents dans ladite composition en tant que cristaux individuels, agglomérations ayant une taille moyenne de particules inférieure à 15 µm par MEB selon la description et la limite inférieure de la taille moyenne de particules de l'agglomération est la taille moyenne de cristal individuel de la composition, ou une combinaison desdits cristaux individuels et desdites agglomérations ; et
iii. lesdits cristaux de tamis moléculaire sont un aluminosilicate ou un silico-aluminophosphate d'un type d'ossature ayant une taille maximale de cycle de huit atomes tétraédriques ;
dans lequel le rapport de la taille moyenne de pore à la taille moyenne de cristal va de 3:1 à 20:1 ; et
dans lequel le rapport de la taille moyenne de pore à la taille moyenne de particules d'agglomérations va de 3:1 à 20:1.

2. Article filtrant selon la revendication 1, dans lequel ledit tamis moléculaire a un type d'ossature CHA et ledit métal de transition est choisi parmi au moins l'un parmi Cu et Fe.

3. Article filtrant selon la revendication 2, dans lequel les cristaux sont un aluminosilicate et ont un rapport de la silice à l'alumine (SAR) de 15 à 50.

4. Article filtrant selon la revendication 1, dans lequel la taille moyenne de cristal va de 0,5 µm à 5 µm par MEB.

5. Article filtrant selon la revendication 1, dans lequel ledit substrat poreux a une taille moyenne de pore de 10 µm à 40 µm.

6. Article filtrant selon la revendication 1, dans lequel ledit substrat poreux a une porosité de 30 % à 80 %.

7. Article filtrant selon la revendication 1, dans lequel ledit substrat poreux est un monolithe à écoulement sur paroi en céramique ayant une porosité de 40 % à 75 % et une taille moyenne de pore de 10 µm à 25 µm.

8. Article filtrant selon la revendication 1, dans lequel ledit substrat poreux est un monolithe à écoulement sur paroi en céramique ayant du titanate d'aluminium en tant que phase cristalline prédominante.

9. Système permettant de traiter un gaz d'échappement comprenant :
a. un article filtrant selon la revendication 1,
b. un conduit raccordant le filtre à écoulement sur paroi à une source de gaz d'échappement de combustion pauvre contenant des particules fines et du NOₓ, et
c. un système d'alimentation de réducteur permettant d'introduire un réducteur dans un gaz d'échappement de combustion pauvre, dans lequel le système d'alimentation de réducteur est en communication fluidique avec le filtre à écoulement sur paroi catalytique et est disposé en amont du filtre à écoulement sur paroi catalytique par rapport au flux de gaz à travers le filtre.

10. Procédé permettant de traiter un gaz d'échappement comprenant :
a. le passage d'un gaz d'échappement de combustion pauvre comprenant des particules fines et du NOₓ à travers un article filtrant selon la revendication 1, dans lequel ledit passage sépare au moins une partie desdites particules fines par rapport audit gaz d'échappement pour former un gaz d'échappement partiellement purifié ;
b. la mise en contact, en présence d'un agent réducteur, d'au moins l'un du gaz d'échappement de combustion pauvre et du gaz d'échappement partiellement purifié avec la composition de catalyseur SCR pour réduire sélectivement au moins une partie du NOₓ en N₂ et d'autres composants.
